Europäisches Patentamt

European Patent Office

Office européen des brevets

(11) Veröffentlichungsnummer: **0 091 000**
A1

# (12) EUROPÄISCHE PATENTANMELDUNG

(21) Anmeldenummer: 83102816.2

(22) Anmeldetag: 22.03.83

(51) Int. Cl.³: **G 01 C 21/08**
G 08 G 1/00, G 01 R 33/02

(30) Priorität: 07.04.82 DE 3212948

(43) Veröffentlichungstag der Anmeldung:
12.10.83 Patentblatt 83/41

(84) Benannte Vertragsstaaten:
DE FR GB IT

(71) Anmelder: ROBERT BOSCH GMBH
Postfach 50
D-7000 Stuttgart 1(DE)

(72) Erfinder: Otto-Linn, Karl, Dr.-Ing.
Werthmannstrasse 10
D-7500 Karlsruhe 1(DE)

(72) Erfinder: Rothley, Manfred, Dipl.-Ing.
Südendstrasse 41
D-7527 Kraichtal(DE)

(72) Erfinder: Zabler, Erich, Dr.-Ing.
Brunhildstrasse 11
D-7513 Stutensee(DE)

(54) Vorrichtung zur Messung des Erdmagnetfeldes als Navigationshilfe.

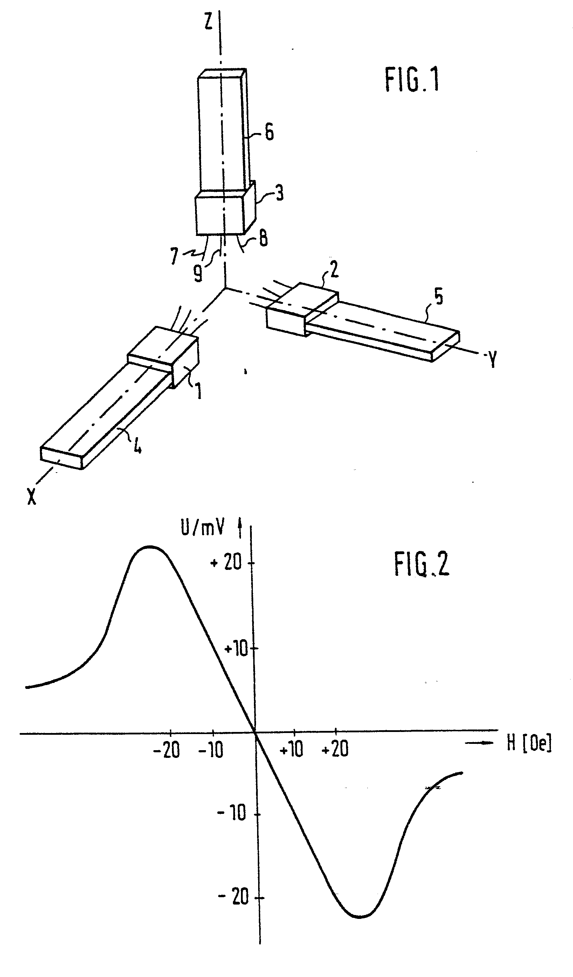

(57) Vorrichtung zur Messung des Elektromagnetfeldes als Navigationshilfe für den Führer eines Kraftfahrzeuges, insbesondere zur Orientierung in einer Stadt, bei welcher drei in orthogonal zueinander angeordneten Achsen (X, Y, Z) liegende, ein elektrisches Signal abgebende, magnetische Sensoren (1, 2, 3) vorgesehen sind und jedem Sensor ein in einer der Achse angeordneter Flußkonzentrator (4, 5, 6) zugeordnet ist (Figur 1).

FIG.1

EP 0 091 000 A1

R. 17747
24.3.1982 Lr/Wl

ROBERT BOSCH GMBH, 7000 Stuttgart 1

Vorrichtung zur Messung des Erdmagnetfeldes
als Navigationshilfe

Die Erfindung betrifft eine Vorrichtung zur Messung des
Erdmagnetfeldes als Navigationshilfe für den Führer eines Kraftfahrzeuges, insbesondere zur Orientierung in
einer Stadt.

Für eine derartige Navigationshilfe wird auch die Himmelsrichtung des Kraftfahrzeuges benötigt. Magnetnadel-
Kompasse scheiden für diesen Zweck wegen ihrer Beschleunigungsempfindlichkeit aus. Es gibt zwar beschleunigungsunempfindliche Meßsysteme auf magnetischer Basis, die jedoch wegen der hohen Kosten für ein Navigationssystem
auf Kraftfahrzeugen weniger in Betracht kommen. Der Erfindung liegt die Aufgabe zugrunde, eine preiswerte,
hoch empfindliche Vorrichtung zur Messung des Erdmagnetfeldes zu schaffen.

Zur Lösung dieser Aufgabe werden die im kennzeichnenden Teil des Anspruchs 1 angegebenen Maßnahmen vorgeschlagen.

...

Weitere Ausgestaltungen der Erfindung sind nachstehend
anhand eines in der Zeichnung dargestellten Ausführungsbeispieles näher beschrieben und erläutert.

Die für ein nicht dargestelltes Kraftfahrzeug bestimmte
Vorrichtung umfaßt nach Figur 1 drei magnetische Sensoren 1, 2 und 3, die untereinander gleich ausgebildet
sind und in drei zueinander senkrecht stehenden Achsen X, Y und Z angeordnet sind. Ihre Richtungsabhängigkeit und Empfindlichkeit ist durch jeweils einen von
drei Flußkonzentratoren 4, 5 und 6 erhöht, die prismatische Gestalt haben und mit ihrer Längsachse in einer der
drei Koordinaten-Achsen X, Y und Z liegen. An den Ausgangsklemmen 7, 8 und 9, welche nur für den in der Z-
Achse angeordneten Sensor 3 bezeichnet sind, entsteht
eine elektrische Spannung, die der auf die jeweilige
Koordinaten-Achse entfallenden Komponente des einfallenden Erdmagnetfeldes entspricht.

Als magnetische Sensoren kommen vorschlagsgemäß magnetoresistive Permalloy-Sensoren vom Barber-Pole-Typ und Hall-
Sonden mit nachgeschaltetem, driftarmem Verstärker in
Betracht.

a) <u>Barber-Pole-Permalloywiderstand (PCQR3-Valvo)</u>

Dieser besitzt für magnetische Feldstärken bis zu $\pm$ 20 Oe
eine extrem hohe Meßempfindlichkeit. Die Kennlinie eines
solchen Sensors in Doppelanordnung ist in Figur 2 dargestellt. Um Feldstärken kleiner als 1 Oe messen zu können
(z.B. das Erdfeld mit 0,2 Oe), muß der magnetische Fluß
mit den Magnetflußkonzentratoren 4, 5, 6 konzentriert werden. Dafür eignen sich metallische Gläser wie z.B.

. . .

VITROVAC 4040 von der Firma Vacuumschmelze. Dieses amorphe Material zeichnet sich durch eine hohe Permeabilität ($\mu \approx 10^5$) und eine verschwindend kleine Koeritivfeldstärke aus, so daß kaum Hysterese auftritt, die einen Meßfehler verursachen würde. Die Konzentration der Feldlinien bewirkt eine Erhöhung der Induktion am Sensor (im praktischen Versuch etwa um Faktor 10).

b) <u>Hallsonden</u>

Hallsonden besitzen eine geringere Empfindlichkeit als der Permalloywiderstand (Faktor 25 bis 100). Gut geeignet ist die Ga-As-Hallsonde KSY10 von Siemens sowie der lineare Hall-IC LOHET 91SS12 von Micro Switch. Die GaAs-Hallsonde besitzt eine für Hallsonden sehr gute Empfindlichkeit bei geringem TK und niedrigem Rauschen, so daß das Signal verstärkt werden kann. Der LOHET hat bereits einen integrierten Verstärker auf dem Chip. Auch hier müssen zur Steigerung der Empfindlichkeit wie oben beschriebenen Flußkonzentratoren verwendet werden. Bei den Hallsonden ist ein Verstärker wegen des geringen Meßsignals notwendig. Er sollte möglichst driftarm sein.

c) Messung von kleinen magnetischen Feldstärken,
   <u>insbesondere dem magnetischen Erdfeld</u>

Dreht man die oben beschriebenen Sensoren in einer horizontalen Ebene, beispielsweise der XY-Ebene, so läßt sich durch Erfassen des Spannungsmaximums oder -minimums der magnetische Nordpol bzw. Südpol der Erde ausmachen. Es muß gleichzeitig der Winkel des Sensors gegenüber einem Bezugssystem, vorteilhaft gegenüber der Längsachse des Kraftfahrzeugs mitgemessen werden. Aus diesem Winkel läßt

...

sich die Richtung des Fahrzeugs bestimmen. Um mit einem
fest mit dem Fahrzeug verbundenen Sensor und auch von der
Kfz-Neigung unabhängig messen zu können, sind die drei
orthogonal zueinander angeordneten Sensoren 1, 2, 3 not-
(siehe Figur 1). Die Fahrzeugrichtung läßt sich leicht
durch Auswerten der Verhältnisse der drei Meßsignale
mit einem Rechner durchführen. Die Aufgabe besteht lediglich darin, einen räumlichen Vektor aus den drei
gemessenen Komponenten zu bestimmen. Aus der Projektion
dieses Vektors auf die Horizontalebene läßt sich die
Nord- und die Fahrzeugrichtung bestimmen.

R. 17147
24.3.1982 Lr/Wl

ROBERT BOSCH GMBH, 7000 Stuttgart 1

Ansprüche

1. Vorrichtung zur Messung des Erdmagnetfeldes als Navigationshilfe für den Führer eines Kraftfahrzeuges, insbesondere zur Orientierung in einer Stadt, dadurch gekennzeichnet, daß drei in orthogonal zueinander angeordneten Achsen (X, Y, Z) liegende, ein elektrisches Signal abgebende, magnetische Sensoren (1, 2, 3) vorgesehen sind und jedem Sensor ein in einer der Achsen angeordneter Flußkonzentrator (4, 5, 6) zugeordnet ist.

2. Vorrichtung nach Anspruch 1, dadurch gekennzeichnet, daß als magnetische Sensoren magnetoresistive Permalloy-Sensoren vom Barber-Pole-Typ vorgesehen sind.

3. Vorrichtung nach Anspruch 1, dadurch gekennzeichnet, daß als mangeitsche Sensoren Hallsensoren, insbesondere mit nachgeschaltetem Verstärker vorgesehen sind.

4. Vorrichtung nach einem der Ansprüche 1 bis 3, dadurch gekennzeichnet, daß an Flußkonzentrator aus einem metallischen Glas, insbesondere einem unter der Bezeichnung VITROVAC 4040 im Handel erhältlichen Glas besteht.

0091000

FIG.1

FIG.2

EINSCHLÄGIGE DOKUMENTE | EP 83102816.2

| Kategorie | Kennzeichnung des Dokuments mit Angabe. soweit erforderlich, der maßgeblichen Teile | Betrifft Anspruch | KLASSIFIKATION DER ANMELDUNG (Int. Cl. ³) |
|---|---|---|---|
| X | FR - A1 - 2 274 892 (BOEING) <br> * Ansprüche 1-3; Fig. 1,3 * <br> -- | 1 | G 01 C 21/08 <br> G 08 G 1/00 <br> G 01 R 33/02 |
| X | US - A - 3 009 525 (DE LIBAN) <br> * Spalte 3, Zeile 69 - Spalte 5, Zeile 15; Spalte 11, Zeilen 31-38; Fig. 2,4a, 5a,6a,11 * <br> -- | 1 | |
| A | GB - A - 1 196 263 (SMITH) <br> * Seite 2, Zeilen 12-42; Fig. 1,2 * <br> -- | 1 | |
| A | US - A - 3 936 949 (DEVAUD) <br> * Zusammenfassung; Fig. 1b,3 * <br> -- | 1 | RECHERCHIERTE SACHGEBIETE (Int. Cl. ³) |
| A | DE - A1 - 2 341 926 (BOSCH) <br> * Seite 4, Absatz 3; Fig. 1 * <br> -- | 1 | G 01 C <br> G 08 G <br> G 01 R |
| A | DE - A - 2 063 809 (JAHNS) <br> * Seite 4, Zeilen 17-24; Fig. 1,2 * <br> -- | 1 | |
| A | GB - A - 1 457 262 (BRENTFORD) <br> * Seite 2, Zeilen 78-128; Fig. 4 * <br> -- | 1,3 | |

Der vorliegende Recherchenbericht wurde für alle Patentansprüche erstellt.

| Recherchenort | Abschlußdatum der Recherche | Prüfer |
|---|---|---|
| WIEN | 29-06-1983 | NEGWER |

| **EINSCHLÄGIGE DOKUMENTE** | | | **KLASSIFIKATION DER ANMELDUNG** (Int. Cl³) |
|---|---|---|---|
| Kategorie | Kennzeichnung des Dokuments mit Angabe, soweit erforderlich, der Maßgeblichen Teile | betrifft Anspruch | |
| A | <u>DE - A1 - 2 946 640</u> (SIEMENS)  <br> * Ansprüche 1-7; Fig. 1-6 *  <br> -- | 1 | |
| A | <u>DE - A1 - 2 921 546</u> (SIEMENS)  <br> * Anspruch 1 *  <br> -- | 1,3 | |
| A | <u>DE - A1 - 2 620 657</u> (IBM)  <br> * Ansprüche 1-4 *  <br> -- | 1,2 | |
| A | <u>DE - A - 1 616 915</u> (VARIAN)  <br> * Seite 1, Absatz 1 *  <br> -- | 1,3 | **RECHERCHIERTE SACHGEBIETE** (Int. Cl³) |
| A | <u>DE - A - 1 516 964</u> (SIEMENS)  <br> * Seite 2, Absatz 2, Anspruch 1 *  <br> ---- | 1,2 | |